(19) Europäisches Patentamt
European Patent Office
Office européen des brevets

(11) **EP 3 068 076 A1**

(12) **EUROPEAN PATENT APPLICATION**

(43) Date of publication:
**14.09.2016 Bulletin 2016/37**

(51) Int Cl.:
**H04L 12/26** (2006.01)   **H04J 3/06** (2006.01)

(21) Application number: **15290064.3**

(22) Date of filing: **10.03.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ALCATEL LUCENT
92100 Boulogne-Billancourt (FR)**

(72) Inventor: **Koch, Werner
70435 Stuttgart (DE)**

(74) Representative: **Reichl, Wolfgang
MERH-IP
Matias Erny Reichl Hoffmann
Patentanwälte PartG mbB
Paul-Heyse-Straße 29
80336 München (DE)**

(54) **AUTOMATIC DETERMINATION OF ASYMMETRICAL DELAY IN TRANSMISSION NETWORKS**

(57)    This application relates to a method of determining asymmetric delay in a network providing a first.communication path between a first device and a second device, and a second communication path between the first device and the second device, wherein a delay asymmetry of the first communication path is known. The method comprises synchronizing an internal clock of the second device with an internal clock of the first device based on the known delay asymmetry of the first communication path and time stamps indicative of timings of transmission and reception of messages exchanged between the first device and the second device via the first communication path, determining whether a switch of communication paths from the first communication path to the second communication path has occurred in the network, and, if said switch of communication paths has occurred, determining, at the second device, a quantity indicative of a delay asymmetry of the second communication path on the basis of time stamps indicative of timings of transmission and reception of messages exchanged between the first device and the second device via the second communication path. The application further relates to an apparatus for determining asymmetric delay in a network.

Fig. 7

**Description**

**Technical Field**

This application relates to a method of determining asymmetric delay in a network and to an apparatus for determining asymmetric delay in a network. The application is particularly applicable to synchronizing clocks of devices that are connected through a transmission network providing plural transmission paths (communication paths) between the devices.

**Background**

Synchronization between internal clocks of spatially separated devices on a network is required in many fields of technology, such as in modern telecommunication systems (e.g. LTE communication systems) including several spatially separated transmitters or in satellite navigation systems including several spatially separated ground stations, to name only two examples.

The IEEE 1588 standard specifies the Precious Timing Protocol (PTP) for exchange of timing information between devices. The PTP may be used to synchronize clocks throughout a network. A basic requirement of synchronization of internal clocks of two devices on the network using the PTP is either absence of an asymmetric delay (delay asymmetry) between the two devices, or at least knowledge of the delay asymmetry. Therein, the delay asymmetry is defined to relate to a difference in transmit time (path delay) between transmission from a first device to a second device and transmission from the second device to the first device. In reality, the delay asymmetry of complex networks is not zero. Thus, conventionally, the delay asymmetry of an original communication path between the two devices is measured manually by temporarily breaking the communication path and inserting suitable measurement equipment.

Under these circumstances, stability of the delay asymmetry is required in order to avoid the necessity of having to perform recurring manual measurements of the delay asymmetry. In reality, this requirement oftentimes cannot be met for complex transmission networks. For instance, the delay asymmetry is expected to change if the original communication path between the two devices changes, e.g. due to a protection switch of the network in reaction to failure of the original communication path.

Thus, there is a need for improved schemes for synchronizing internal clocks of devices connected by a transmission network.

**Summary**

In view of this need, the present document proposes a method of determining asymmetric delay in a network and an apparatus for determining asymmetric delay in a network, the method and apparatus having the features of the respective independent claims.

An aspect of the disclosure relates to a method of determining asymmetric delay in a network. The network may be a transmission network. The network may provide a first communication path (e.g. a regular path) between a first device (e.g. a master device) and a second device (e.g. a slave device), and a second communication path (e.g. a protection path) between the first device and the second device. An asymmetric delay (delay asymmetry) of the first communication path may be known (e.g. by virtue of previous measurement). Therein, the delay asymmetry may relate to a difference between a transmission time (path delay) of transmission in one direction between the first device and the second device, and a transmission time of transmission in the reverse direction, i.e. to a forward-backward asymmetry in transmission times (path delays) of the respective communication path. The method may comprise synchronizing (aligning) an internal clock (e.g. a slave clock) of the second device with an internal clock (e.g. a master clock) of the first device based on the known delay asymmetry of the first communication path and time stamps indicative of timings of transmission and reception of messages exchanged between the first device and the second device via the first communication path. At least one message may be transmitted from the first device to the second device, and at least one message may be transmitted from the second device to the first device. In the above, synchronization of internal clocks may involve determining a timing offset between the internal clock of the second device and the internal clock of the first device based on the known delay asymmetry of the first communication path and said time stamps, and adjusting the internal clock of the second device (e.g. by appropriately shifting its time frame in accordance with the determined timing offset) to nullify a timing offset between said internal clocks, or determining and storing the timing offset, and arithmetically correcting for the timing offset whenever necessary, using the stored value of the timing offset. The method may further comprise determining whether a switch of communication paths (e.g. a protection switch) from the first communication path to the second communication path has occurred in the network. Yet further, the method may comprise determining, at the second device, if said switch of communication paths has occurred, a quantity indicative of a delay asymmetry of the second communication path on the basis of time stamps indicative of timings of transmission and reception of messages exchanged between the first device and the second device via the second communication path. At least one message may be transmitted from the first device to the second device, and at least one message may be transmitted from the second device to the first device. As indicated above, the first device may be master device including a master clock and the second device may be a slave device including a slave clock.

In embodiments, the switch of communication paths may relate to a protection switch of the network and the second communication path may relate to a protection path. The first communication path may relate to a regular communication path between the first and second devices. The protection switch may be performed on occurrence of a failure of the first communication path, e.g. due to disruption of a communication cable of the network or failure of a network device of the network, such as a network switch or the like. In other words, the method may be employed in a protection-switching environment.

Accordingly, even if a switch of communication paths has occurred from the first communication path to the second communication path, it will not be required to manually measure the delay asymmetry of the second communication path. Given that the internal clocks of the first and second devices had been synchronized before the switch of communication paths, the delay asymmetry of the second communication path can be determined by exchanging messages between the first and second devices, via the second communication path. Manual measurement of the delay asymmetry of the second communication path is not required in this case. Thus, operation of the second device is not impaired by the switch of communication paths in the network, and downtime resulting e.g. from breaking up the second communication path and manually measuring the delay asymmetry of the second communication path is avoided. In consequence, reliable and stable operation of the second device is achieved even on occurrence of switches of communication paths.

In embodiments, determining the quantity indicative of the delay asymmetry of the second communication path may involve assuming that a timing offset between the internal clock of the second device and the internal clock of the first device is zero or at least known. If the internal clocks of the first and second devices had been synchronized by adjusting the internal clock of the second device, the timing offset may be assumed to be zero. If the timing offset determined in the course of synchronization had been stored, the timing offset may be assumed to be equal to the stored value of the timing offset.

In embodiments, determining the quantity indicative of the delay asymmetry of the second communication path may be performed exclusively on the basis of the time stamps indicative of the timings of transmission and reception of the messages exchanged between the first device and the second device via the second communication path, and, if the timing offset is different from zero but known, also said timing offset.

By making this assumption, the delay asymmetry may be conveniently determined exclusively based on information that is available to the second device. Accordingly, external input such as from manual measurements of the delay asymmetry is not required for appropriately synchronizing the internal clocks after occurrence of the switch of communication paths.

In embodiments, the step of determining the quantity indicative of the delay asymmetry of the second communication path may be performed no later than a predetermined period of time after said switch of communication paths has occurred. The predetermined period of time may be chosen in accordance with a known drift rate of the internal clock of the second device, e.g. the smaller the drift rate, the longer the predetermined period of time, and vice versa. The predetermined period of time may be of the order of seconds. The predetermined period of time may be smaller than one minute.

By performing said step of determining the quantity indicative of the delay asymmetry of the second communication path shortly after the switch of communication paths has occurred (or has been detected), validity of the assumption that the timing offset is zero or at least known is ensured. Thereby, accuracy of the determined delay asymmetry of the second communication path is improved.

In embodiments, determining the quantity indicative of the delay asymmetry of the second communication path may involve exchanging messages between the first device and the second device via the second communication path. Said determining may further involve recording respective timings of transmission and reception of these messages as time stamps in the first device and in the second device. Said determining may yet further involve transmitting time stamps recorded at the first device to the second device via the second communication path.

In embodiments, determining the delay asymmetry of the second communication path may be performed using the formula $dA = \Delta t + \frac{1}{2}[(t4 - t3) - (t2 - t1)]$ or a mathematical equivalent thereof. Therein, dA indicates the delay asymmetry of the second communication path, $\Delta t$ indicates the timing offset, t1 indicates the time stamp of transmission of a first message transmitted by the first device to the second device via the second communication path, t2 indicates the time stamp of reception of the first message at the second device, t3 indicates the time stamp of transmission of a second message transmitted by the second device to the first device via the second communication path, and t4 indicates the time stamp of reception of the second message at the first device. In case that the timing offset is assumed to be zero, the formula $dA = \frac{1}{2}[(t4 - t3) - (t2 - t1)]$ may be used instead.

Using the above formula, the delay asymmetry can be calculated in a simple and efficient manner, exclusively based on information that is available to the second device, without requiring manual measurement of any kind.

In embodiments, the method may further comprise transmitting the first message by the first device to the second device via the second communication path. The method may further comprise recording a timing of transmission of the first message at the first device as time stamp t1. The method may further comprise receiving the first message at the second device. The method may further comprise recording a timing of reception of the first message at the second device as time stamp t2. The method may further comprise transmitting the second message by the second device to the first device via the second communication path. The method may further comprise recording a timing of transmission of the second message at the second device as time stamp t3. The method may further comprise receiving the second message at the first device. The method may yet further comprise recording a timing of reception of the second message at the first device as time stamp t4. The first message may be a SYNC message according to standard IEEE 1588. The second message may be a DELAY REQUEST message according to standard IEEE 1588.

In embodiments, the method may further comprise transmitting a third message by the first device to the second device, the third message containing information indicative of the time stamp t1. The method may yet further comprise transmitting a fourth message by the first device to the second device, the fourth message containing information indicative of the time stamp t4. The third message may be a FOLLOW_UP message according to standard IEEE 1588. The fourth message may be a DELAY RESPONSE message according to standard IEEE 1588. Transmission of the third and fourth messages may proceed via the second communication path.

Employing the above procedure, information that is required for determining the delay asymmetry of the second communication path, e.g. time stamps t1, t2, t3, t4 can be obtained in a simple and efficient manner. Provision of information from external sources (i.e. external to the first and second devices) is not required.

In embodiments, the method may further comprise synchronizing the internal clock of the second device with the internal clock of the first device based on the determined delay asymmetry of the second communication path and said time stamps indicative of said timings of transmission and reception of said messages exchanged between the first device and the second device via the second communication path. In other words, synchronizing the internal clock of the second device with the internal clock of the first device may proceed based on dA and t1, t2, t3, t4. Synchronizing the internal clock of the second device with the internal clock of the first device may further involve determining a timing offset between the internal clock of the second device and the internal clock of the first device based on the determined delay asymmetry of the second communication path and said time stamps indicative of timings of transmission and reception of said messages exchanged between the first device and the second device via the second communication path (e.g. time stamps t1, t2, t3, t4). Said synchronizing may yet further involve adjusting the internal clock of the second device in accordance with the determined timing offset, to be aligned with the internal clock of the first device, e.g. to output, at a given point in time, the same time of day as the internal clock of the first device.

Thereby, synchronization of the internal clock of the second device can be performed even after a switch of communication paths of the network, without manual measurement of the delay asymmetry of the second communication path. Accordingly, stable and reliable operation of the second device in synchronization to the first device is ensured even after occurrence of said switch of communication paths, and downtime of the second device due to breaking up the second communication path and manually measuring its delay asymmetry by insertion of measurement equipment is avoided.

In embodiments, determining whether a switch of communication paths has occurred may involve determining, at a first timing, a first timing offset between the internal clock of the first device and the internal clock of the second device based on the known delay asymmetry of the first communication path and time stamps indicative of timings of transmission and reception of messages exchanged between the first device and the second device. Said determining may further involve determining, at a second timing, a second timing offset between the internal clock of the first device and the internal clock of the second device based on the known delay asymmetry of the first communication path and time stamps indicative of timings of transmission and reception of messages exchanged between the first device and the second device. This may involve exchanging said messages at each of the first and second timings. Said determining may further involve comparing a difference between said first and second timing offsets to a predetermined threshold. Said determining may yet further involve determining that the switch of communication paths has occurred if said difference is above said predetermined threshold. Therein, communication (i.e. exchange of messages) at the first timing may proceed via the first communication path, and communication at the second timing may proceed via the second communication path if a switch of communication paths has occurred, or via the first communication path if the switch of communication paths has not occurred. Determination of whether a switch of communication paths has occurred may be performed at regular intervals. The predetermined threshold may depend on the duration of said interval between successive determinations, e.g. the longer the interval, the greater the predetermined threshold.

In embodiments, determining whether a switch of communication paths has occurred may involve determining that a message indicating the switch of communication paths has been received at the second device. Said determining may further or alternatively involve determining that a message indicating loss of signal at a network device of the network has been received at the second device.

Accordingly, a switch of communication paths from the first communication path to the second communication path (e.g. a protection switch) can be reliably detected, e.g. by the second device, and faulty synchronization of the internal clock of the second device with the internal clock of the first device due to a change in delay asymmetry can be avoided. Uninterrupted and stable operation of the second device in view of switches of communication paths is thus ensured.

Another aspect of the disclosure relates to an apparatus for determining asymmetric delay in a network. The network may be a transmission network. The network may provide a first communication path (e.g. a regular path) between a first device (e.g. a master device) and a second device (e.g. a slave device), and a second communication path (e.g. a protection path) between the first device and the second device. The apparatus may be provided as a component of the second device (i.e. may be comprised by the second device), or may be connected to the second device. A symmetric delay (delay asymmetry) of the first communication path may be known (e.g. by virtue of a previous measurement). Therein, the delay asymmetry may relate to a difference between a transmission time (path delay) of transmission in one direction between the first device and the second device, and a transmission time of transmission in the reverse direction, i.e. to a forward-backward asymmetry in transmission times (path delays) of the respective communication path. The apparatus may comprise synchronizing means for synchronizing (aligning) an internal clock (e.g. a slave clock) of the second device with an internal clock (e.g. a master clock) of the first device based on the known delay asymmetry of the first communication path and time stamps indicative of timings of transmission and reception of messages exchanged between the first device and the second device via the first communication path. At least one message may be transmitted from the first device to the second device, and at least one message may be transmitted from the second device to the first device. In the above, the synchronizing means may be adapted to determine a timing offset between the internal clock of the second device and the internal clock of the first device based on the known delay asymmetry of the first communication path and said time stamps, and to adjust the internal clock of the second device (e.g. by appropriately shifting its time frame in accordance with the determined timing offset) to nullify a timing offset between said internal clocks, or determining and storing the timing offset, and arithmetically correcting for the timing offset whenever necessary, using the stored value of the timing offset. The apparatus may further comprise path switch detection means for determining whether a switch of communication paths (e.g. a protection switch) from the first communication path to the second communication path has occurred in the network. Yet further, the apparatus may comprise delay asymmetry calculation means for calculating a delay asymmetry, wherein said delay asymmetry calculation means may be adapted to, if said switch of communication paths has occurred, calculate a quantity indicative of a delay asymmetry of the second communication path on the basis of time stamps indicative of timings of transmission and reception of messages exchanged between the first device and the second device via the second communication path. At least one message may be transmitted from the first device to the second device, and at least one message may be transmitted from the second device to the first device. As indicated above, the first device may be a master device including a master clock and the second device may be a slave device including a slave clock.

In embodiments, the switch of communication paths may relate to a protection switch of the network and the second communication path may relate to a protection path. The first communication path may relate to a regular communication path between the first and second devices. The protection switch may be performed on occurrence of a failure of the first communication path, e.g. due to disruption of a communication cable of the network or failure of a network device of the network, such as a network switch or the like. In other words, the apparatus may be employed in a protection-switching environment.

In embodiments, the delay asymmetry calculation means may be adapted to assume in the calculation that a timing offset between the internal clock of the second device and the internal clock of the first device is zero or at least known. If the internal clocks of the first and second devices had been synchronized by adjusting the internal clock of the second device, the timing offset may be assumed to be zero. If the timing offset determined in the course of synchronization had been stored, the timing offset may be assumed to be equal to the stored value of the timing offset.

In embodiments, the delay asymmetry calculation means may be adapted to determine the quantity indicative of the delay asymmetry of the second communication path exclusively on the basis of the time stamps indicative of the timings of transmission and reception of the messages exchanged between the first device and the second device via the second communication path, and, if the timing offset is different from zero but known, also said timing offset.

In embodiments, the delay asymmetry calculation means may be adapted to perform the calculation of the quantity indicative of the delay asymmetry of the second communication path no later than a predetermined period of time after said switch of communication paths has occurred. The delay asymmetry calculation means may be adapted to set the predetermined period of time in accordance with a known drift rate of the internal clock of the second device, e.g. the smaller the drift rate, the longer the predetermined period of time, and vice versa. The predetermined period of time may be of the order of seconds. The predetermined period of time may be smaller than one minute.

In embodiments, the apparatus may comprise message exchanging means for exchanging messages between the first device and the second device via the second communication path. Said message exchanging means may be further adapted to record respective timings of transmission and reception of these messages as time stamps. Said message exchanging means may be yet further adapted to receive, via the second communication path, messages containing information indicative of time stamps recorded at the first device. Said message exchanging means may be further adapted to perform all the above-mentioned action with respect to the first communication path.

In embodiments, the delay asymmetry calculation means may be adapted to calculate the quantity indicative of the delay asymmetry of the second communication path by using the formula $dA = \Delta t + 1/2 \ [(t4-t3)-(t2-t1)]$ or a mathematical equivalent thereof. Therein, dA indicates the delay asymmetry of the second communication path, $\Delta t$ indicates the timing offset, t1 indicates the time stamp of transmission of a first message transmitted by the first device to the second device via the second communication path, t2 indicates the time stamp of reception of the first message at the second device, t3 indicates the time stamp of transmission of a second message transmitted by the second device to the first device via the second communication path, and t4 indicates the time stamp of reception of the second message at the first'device. In case that the timing offset is assumed to be zero, the formula $dA = 1/2 \ [(t4-t3)-(t2-t1)]$ may be used instead.

In embodiments, the message exchanging means may be adapted to receive the first message from the first device via the second communication path. The message exchanging means may be further adapted to record a timing of reception of the first message at the second device as time stamp t2. The message exchanging means may be further adapted to transmit the second message to the first device via the second communication path. The message exchanging means may be further adapted to record a timing of transmission of the second message at the second device as time stamp t3. The first message may be a SYNC message according to standard IEEE 1588. The second message may be a DELAY REQUEST message according to standard IEEE 1588.

In embodiments, the message exchanging means may be adapted to receive a third message from the first device, the third message containing information indicative of the time stamp t1. The message exchanging means may be further adapted to receive a fourth message from the first device, the fourth message containing information indicative of the time stamp t4. The third message may be a FOLLOW_UP message according to standard IEEE 1588. The fourth message may be a DELAY RESPONSE message according to standard IEEE 1588. Transmission of the third and fourth messages may proceed via the second communication path.

In embodiments, the synchronizing means may be further adapted to synchronize the internal clock of the second device with the internal clock of the first device based on the determined delay asymmetry of the second communication path and said time stamps indicative of said timings of transmission and reception of said messages exchanged between the first device and the second device via the second communication path. In other words, synchronizing the internal clock of the second device with the internal clock of the first device may proceed based on dA and t1, t2, t3, t4. Said synchronizing means may be further adapted to determine a timing offset between the internal clock of the second device and the internal clock of the first device based on the determined delay asymmetry of the second communication path and said time stamps indicative of timings of transmission and reception of said messages exchanged between the first device and the second device via the second communication path (e.g. time stamps t1, t2, t3, t4). Said synchronizing means may be yet further adapted to adjust the internal clock of the second device in accordance with the determined timing offset, to be aligned with the internal clock of the first device, e.g. to output, at a given point in time, the same time of day as the internal clock of the first device.

In embodiments, the path switch detection means may be adapted to determine, at a first timing, a first timing offset between the internal clock of the first device and the internal clock of the second device based on the known delay asymmetry of the first communication path and time stamps indicative of timings of transmission and reception of messages exchanged between the first device and the second device. The path switch detection means may be further adapted to determine, at a second timing, a second timing offset between the internal clock of the first device and the internal clock of the second device based on the known delay asymmetry of the first communication path and time stamps indicative of timings of transmission and reception of messages exchanged between the first device and the second device. This may involve exchanging (i.e. transmitting or receiving) said messages at each of the first and second timings, e.g. by the message exchanging means. The path switch detection means may be further adapted to compare a difference between said first and second timing offsets to a predetermined threshold. The path switch detection means may be yet further adapted to determine that the switch of communication paths has occurred if said change is above said predetermined threshold. Therein, communication (i.e. exchange of messages) at the first timing may proceed via the first communication path, and communication at the second timing may proceed via the second communication path if a switch of communication paths has occurred, or via the first communication path if the switch of communication paths has not occurred. Determination of whether a switch of communication paths has occurred may be performed at regular intervals. The predetermined threshold may be set depending on the duration of said interval between successive determinations, e.g. the longer the interval, the greater the predetermined threshold.

In embodiments, the path switch detection means may be adapted to determine that a message indicating the switch of communication paths has been received at the second device. Further, the path switch detection means may be adapted to determine that a message indicating loss of signal at a network device of the network has been received by the second device.

It will be appreciated that method steps and apparatus features may be interchanged in many ways. In particular, the details of the disclosed apparatus can be implemented as a method, as the skilled person will appreciate.

**Brief Description of the Figures**

Embodiments of the disclosure are explained below in an exemplary manner with reference to the accompanying drawings, wherein

**Fig. 1** schematically illustrates an example configuration of a first device and a second device connected by a communication path without delay asymmetry,

**Fig. 2** is a time chart schematically illustrating an example of a synchronization procedure in the example configuration of Fig. 1,

**Fig. 3** schematically illustrates an example configuration of the first device and the second device connected by a communication path with delay asymmetry,

**Fig. 4** is a time chart schematically illustrating an example of a synchronization procedure in the example configuration of **Fig. 3,**

**Fig. 5** is another time chart schematically illustrating an example of a synchronization procedure in the example configuration of **Fig. 3,**

**Fig. 6A** and **Fig. 6B** schematically illustrate example configurations of the first device and the second device connected by a transmission network, to which embodiments of the present disclosure may be applied,

**Fig. 7** schematically illustrates a flow chart of an example of a method according to embodiments of the invention, and

**Fig. 8** is a time chart schematically illustrating exchange of messages between the first device and the second device.

**Detailed Description**

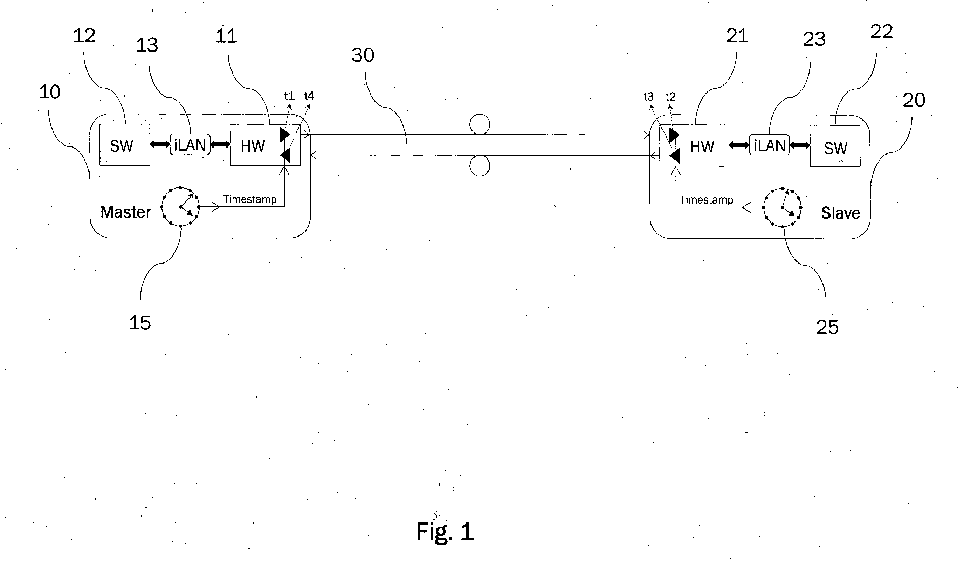

**Fig. 1** schematically illustrates an example configuration of a first device (e.g. a master device) 10 and a second device (e.g. a slave device) 20 connected by a communication path 30 (e.g. a cable or cable assembly) without delay asymmetry.
The first device 10 may comprise a hardware unit 11 (e.g. implementing a message exchanging means, or message exchanging unit) adapted to transmit and receive messages, a software unit (e.g. a control unit, e.g. implementing a delay asymmetry calculation means/unit, a synchronizing means/unit, and/or a path switching detection means/unit) 12 controlling the hardware unit 11, and an internal network 13 connecting the hardware unit 11 and the software unit 12. The first device 10 may further comprise an internal clock (e.g. master clock) 15.
The second device 20 may comprise a hardware unit 21 (e.g. implementing a message exchanging means, or message exchanging unit) adapted to transmit and receive messages, a software unit 22 (e.g. a control unit, e.g. implementing a delay asymmetry calculation means/unit, a synchronizing means/unit, and/or a path switching detection means/unit) controlling the hardware unit 21, and an internal network 23 connecting the hardware unit 21 and the software unit 22. The second device 20 may further comprise an internal clock (e.g. slave clock) 25.
The internal clocks 15, 25 of the first and second devices 10, 20 are each keeping track of time, e.g. by keeping track of a time of day (ToD), such as a number of time units (e.g. seconds, milliseconds, nanoseconds) that have passed since a predetermined point in time (e.g. midnight), for example. Respective internal clocks 15, 25 are connected to respective hardware units 11, 21 to provide said hardware units 11, 21 with respective timing signals (e.g. time stamps). This enables the hardware units 11, 21 to record time stamps of timings of transmission and reception of messages.
The above internal configuration of the first device 10 and second device 20 is understood as not essential to the present disclosure and a variety of alternative configurations may be used, as long as the first and second devices 10, 20 have respective internal clocks, are capable of transmitting and receiving messages, and are capable of recording time stamps of timings of transmission and reception of these messages.
Next, a procedure of synchronizing (aligning) the internal clock 25 of the second device 20 with the internal clock 15 of the first device 10 will be described. This procedure may conform to the IEEE 1588 standard. Notably, the procedure as well as the present disclosure in general may also be applied to determination of path delays and delay asymmetries according to the ITU-T G.709 Standard, or employed in the context of determination of path delays and delay asymmetries according to the ITU-T G.709 Standard. Any necessary adaptations of the present disclosure to this standard are understood to be within the skilled person's scope.

The procedure may involve obtaining time stamps indicative of timings of transmission and reception of messages exchanged between the first device 10 and the second device 20. An example for obtaining these time stamps that may be employed in all embodiments of the invention will be described next.

First, the first device 10 may send (transmit) a first massage (e.g. a SYNC message according to the PTP) to the second device 20. The first device 10 may record the timestamp provided by the internal clock 15 of the first device 10 at the moment that the first message is actually sent out, e.g. by the hardware unit 11. This time stamp may be denoted t1.

When receiving the first message, the second device 20 may record the timestamp provided by the internal clock 25 of the second device 20 at the moment that the first message is actually received, e.g. by the hardware unit 21. This time stamp may be denoted t2.

After having received the first message, the second device 20 may send (transmit) a second message (e.g. a DELAY_REQUEST message according to the PTP) to the first device 10. The second device 20 may record the timestamp provided by the internal clock 25 of the second device 20 at the moment that the second message is actually sent out, e.g. by the hardware unit 21. This time stamp may be denoted t3.

When receiving the second message, the first device 10 may record the timestamp provided by the internal clock 15 of the first device 10 at the moment that the second message is actually received, e.g. by the hardware unit 21. This time stamp may be denoted t4.

Further, after having transmitted the first message, the first device 10 may transmit a third message (e.g. a FOLLOW_UP message according to the PTP) to the second device 20, the third message containing information indicative of the time stamp t1. Yet further, after having received the second message, the first device 10 may transmit a fourth message (e.g. a DELAY_RESPONSE message according to the PTP) to the second device 20, the third message containing information indicative of the time stamp t4. In the above, the second device 20 may transmit the second message after having received the third message from the first device 10.

After having run through the above processing, the second device 20 has knowledge of time stamps t1, t2, t3, t4 indicative of the timings of transmission and reception, respectively, of the first and second messages exchanged between the first and second devices 10, 20. Therein, time stamps t1 and t4 relate to the time frame of the internal clock 15 of the first device 10 (e.g. are expressed in the ToD of the internal clock 15 of the first device 10), and time stamps t2 and t3 relate to the time frame of the internal clock 25 of the second device 20 (e.g. are expressed in the ToD of the internal clock 25 of the second device 20).

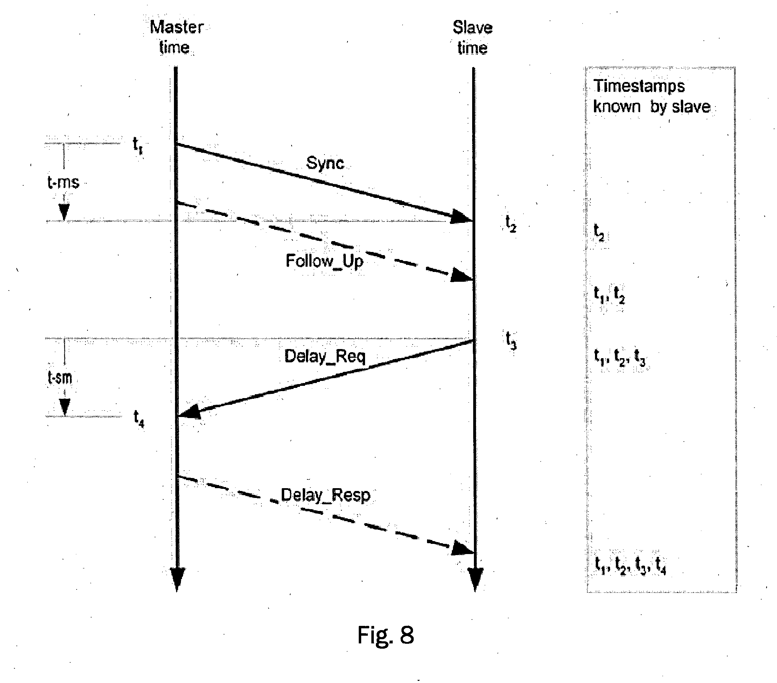

**Fig. 8** is a time chart schematically illustrating an example of the exchange of the first to fourth messages between the first device 10 and the second device 20, namely as exchange of the SYNC message, the DELAY_REQ message, the FOLLOW_UP message, and the DELAY_RESP message according to the PTP specified by the IEEE 1588 standard. Therein, t-ms indicates the path delay for transmission from the first device 10 to the second device 20, and t-sm indicates the path delay for transmission from the second device 20 to the first device 10. **Fig. 8** further indicates the time stamps that the second device 20 has knowledge of at respective timings.

Having knowledge of time stamps t1, t2, t3, t4, the second device 20 may calculate (determine) a mean path delay of the communication path 30 and a timing offset between the internal clock 25 of the second device 20 and the internal clock 15 of the first device 10. The mean path delay (mPD) may be calculated via

$$mPD = \tfrac{1}{2}\,[(t2 - t1) + (t4 - t3)] \qquad\qquad (1)$$

or a mathematical equivalent thereof. The timing offset (At) may be calculated via

$$\Delta t = \tfrac{1}{2}\,[(t2 - t1) - (t4 - t3)] \qquad\qquad (2)$$

or a mathematical equivalent thereof.

Having determined the timing offset, the internal clock 25 of the second device 20 may be synchronized (aligned) with the internal clock 15 of the first device 10. This may be achieved by appropriately shifting the time frame of the internal clock 25 of the second device 20 (e.g. by subtracting the timing offset from the ToD of the internal clock 25 of the second device 20). Alternatively, the timing offset may be stored at the second device 20, and time stamps produced by the internal clock 25 of the second device 20 may be arithmetically corrected, using the stored value of the timing offset.

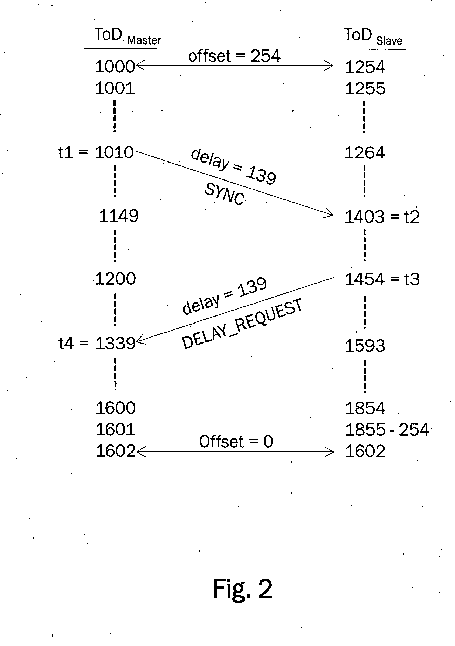

Next, an example of the above synchronization procedure will be described with reference to **Fig. 2,** which is a time chart schematically illustrating time stamps of transmission and reception, respectively, of messages that are exchanged between the first device 10 and the second device 20. The left column of Fig. 2 indicates a ToD, or more generally, a time frame of the internal clock 15 of the first device 10, e.g. a number of time units (e.g. seconds, milliseconds, nanoseconds) after a predetermined timing (e.g. midnight), and the right column indicates the ToD of the internal clock 25 of the second device 20, or more generally, a time frame of the internal clock 25 of the second device 20, e.g. a number of time units after the predetermined timing. Notably, in the presence of a timing offset between the internal clock 25 of the second device 20 and the internal clock 15 of the first device 10, the ToDs (or time frames) do not coincide, as is illustrated in **Fig. 2.**

In the example of **Fig. 2,** the internal clock 15 of the first device 10 and the internal clock 25 of the second device 20 are assumed to have a timing offset of 254 time units, the internal clock 25 of the second device 20 being ahead of the internal clock 15 of the first device 10. It is further assumed that a path delay of the communication path 30 (time of propagation between devices along the communication path 30) in the direction from the first device 10 to the second device 20 is equal to the path delay in the reverse direction. In the example of **Fig. 2,** the path delay is 139 time units. At timing t1 = 1010 (time units) in the time frame of the internal clock 15 of the first device 10, the first message is transmitted by the first device 10, i.e. the time stamp of transmission of the first message is t1. At this point, the ToD of the internal clock 25 of the second device 20 is 1264. At timing t2 = 1403 in the time frame of the internal clock 25 of the second device 20, the first message is received by the second device 20, i.e. the time stamp of reception of the first message is t2. At this point, the ToD of the internal clock 15 of the first device 10 is 1149. At timing t3 = 1454 in the time frame of the internal clock 25 of the second device 20, the second message is transmitted by the second device 20, i.e. the time stamp of transmission of the second message is t3. At this point, the ToD of the internal clock 15 of the first device 10 is 1200. At timing t4 = 1339 in the time frame of the internal clock 15 of the first device 10, the second message is received by the first device 10, i.e. the time stamp of reception of the second message is t4. At this point, the ToD of the internal clock 25 of the second device 20 is 1593.

Using Equation (2), the timing offset $\Delta t$ between the internal clock 25 of the second device 20 and the internal clock 15 of the first device 10 may be determined based on time stamps t1, t2, t3, t4 to be equal to 254. By subtracting the determined timing offset from the ToD of the internal clock 25 of the second device 20 (i.e. by appropriately shifting the time frame of the internal clock 25 of the second device 20), the internal clock 25 of the second device 20 may be synchronized with the internal clock 15 of the first device 10. Accordingly, the internal clock 15 of the first device 10 and the internal clock 25 of the second device 20 are in agreement with each other at timing 1602.

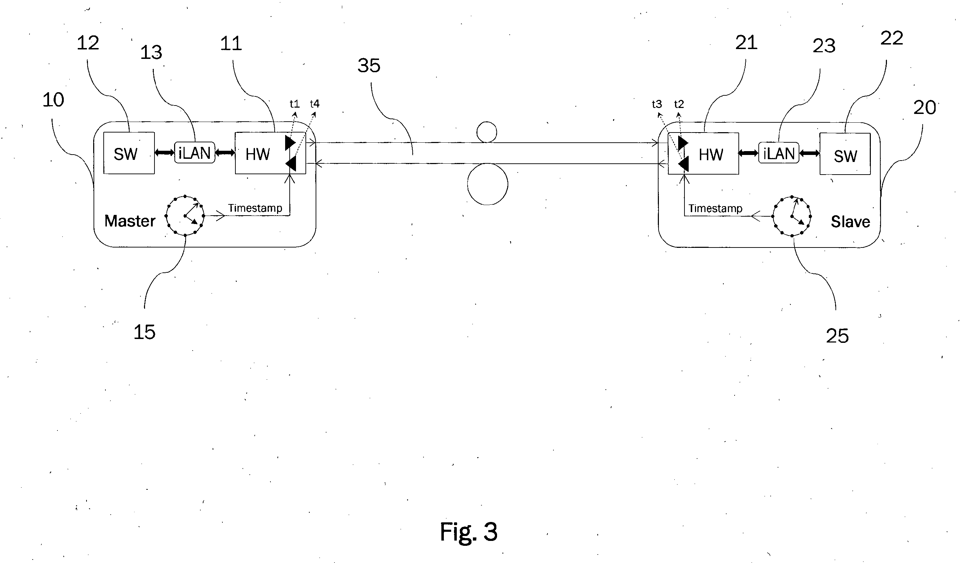

**Fig. 3** schematically illustrates an example configuration of the first device and the second device connected by a communication path with delay asymmetry. The configuration illustrated in **Fig. 3** is identical to that of **Fig. 1,** identical reference numerals indicating identical elements, with the exception that the communication path 35 connecting the first device 10 and the second device 20 has a delay asymmetry.

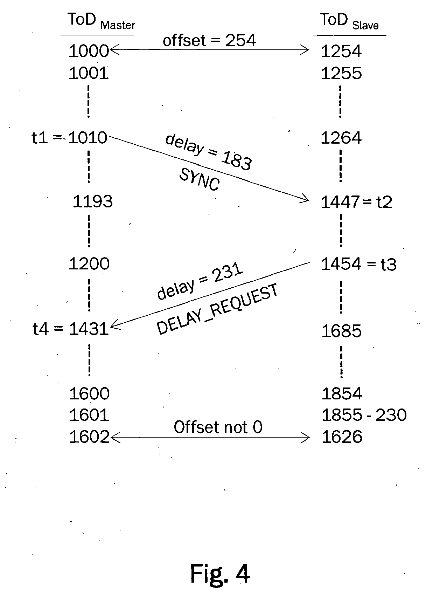

In this configuration, time stamps t1, t2, t3, t4 may be obtained by the second device 20 in the same manner as described above, i.e. by exchanging the first to second or first to fourth messages between the first device 10 and the second device 20. However, using equation (2) to determine the timing offset between the internal clock 25 of the second device 20 and the internal clock 15 of the first device 10 would not yield correct results, as will be illustrated with reference to **Fig. 4,** which is a time chart schematically illustrating time stamps of transmission and reception, respectively, of messages that are exchanged between the first device 10 and the second device 20. As in the case of **Fig. 2,** the left column of **Fig. 4** indicates a ToD of the internal clock 15 of the first device 10, and the right column indicates the ToD of the internal clock 25 of the second device 20.

In the example of **Fig. 4,** the internal clock 15 of the first device 10 and the internal clock 25 of the second device 20 are assumed to have a timing offset of 254 time units, the internal clock 25 of the second device 20 being ahead of the internal clock 15 of the first device 10. It is further assumed that a path delay of the communication path 35 (time of propagation between devices along the communication path 35) in the direction from the first device 10 to the second device 20 is 183 time units, whereas the path delay in the reverse direction is 231 time units. At timing t1 = 1010 (time units) in the time frame of the internal clock 15 of the first device 10, the first message is transmitted by the first device 10, i.e. the time stamp of transmission of the first message is t1. At this point, the ToD of the internal clock 25 of the second device 20 is 1264. At timing t2 = 1447 in the time frame of the internal clock 25 of the second device 20, the first message is received by the second device 20, i.e. the time stamp of reception of the first message is t2. At this point, the ToD of the internal clock 15 of the first device 10 is 1193. At timing t3 = 1454 in the time frame of the internal clock 25 of the second device 20, the second message is transmitted by the second device 20, i.e. the time stamp of transmission of the second message is t3. At this point, the ToD of the internal clock 15 of the first device 10 is 1200. At timing t4 = 1431 in the time frame of the internal clock 15 of the first device 10, the second message is received by the first device 10, i.e. the time stamp of reception of the second message is t4. At this point, the ToD of the internal clock 25 of the second device 20 is 1685.

Using Equation (2), the timing offset $\Delta t$ between the internal clock 25 of the second device 20 and the internal clock 15 of the first device 10 would be determined based on time stamps t1, t2, t3, t4 to be equal to 230. Thus, subtracting the timing offset from the ToD of the internal clock 25 of the second device 20 would not result in synchronized internal clocks, which is exemplified by the internal clock 15 of the first device 10 and the internal clock 25 of the second device 20 not being in agreement at timing 1602 in the time reference of the internal clock 15 of the first device 10. Notably, the mean path delay may be calculated correctly using Equation (1).

In order to obtain a correct timing offset, the delay asymmetry of the communication path 35 may be taken into account. The delay asymmetry of the communication path 35 may be determined by manual measurement, e.g. by breaking open the communication path 35 and inserting an adequate test set into the communication path 35. In general, the delay asymmetry of a communication path is indicative of a difference between the path delay in one direction of the communication path and the path delay in the reverse direction of the communication path. For example, the delay asymmetry (dA) may be defined by

$$dA = \frac{1}{2} [(\text{path delay } 1 \rightarrow 2) - (\text{path delay } 2 \rightarrow 1)]. \qquad (3)$$

In the example of Fig. 4, the delay asymmetry is given by 24 (i.e. 1/2 [231 - 183]) time units.

The delay asymmetry may be taken into account when determining the timing offset by modifying Equation (2) to

$$\Delta t = \frac{1}{2} [(t2 + dA) - t1) - ((t4 - dA) - t3)] \qquad (4)$$

which for zero delay asymmetry coincides with Equation (2). It is understood that also mathematical equivalents of Equations (3) and (4) may be employed in embodiments of the disclosure.

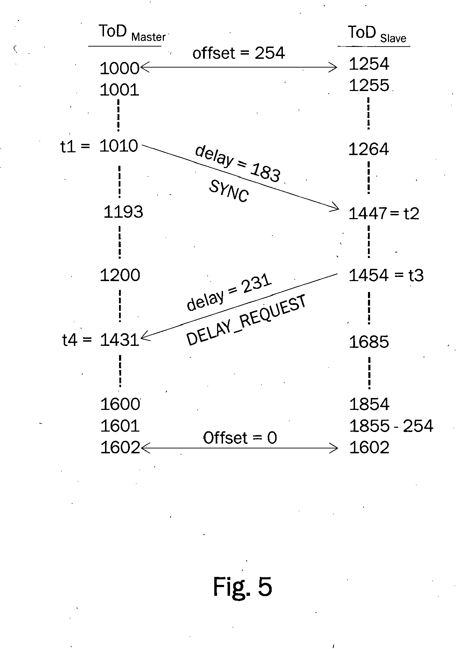

Using Equation (4), the timing offset $\Delta t$ between the internal clock 25 of the second device 20 and the internal clock 15 of the first device 10 may be correctly determined on the basis of time stamps t1, t2, t3, t4 to be equal to 254. By subtracting the determined timing offset from the ToD of the internal clock 25 of the second device 20 (i.e. by appropriately shifting the time frame of the internal clock 25 of the second device 20), the internal clock 25 of the second device 20 may be synchronized with the internal clock 15 of the first device 10. This is illustrated in **Fig. 5,** which is identical to **Fig. 4** except for that the timing offset is correctly determined. Accordingly, in **Fig. 5** the internal clock 15 of the first device 10 and the internal clock 25 of the second device 20 are in agreement with each other at timing 1602.

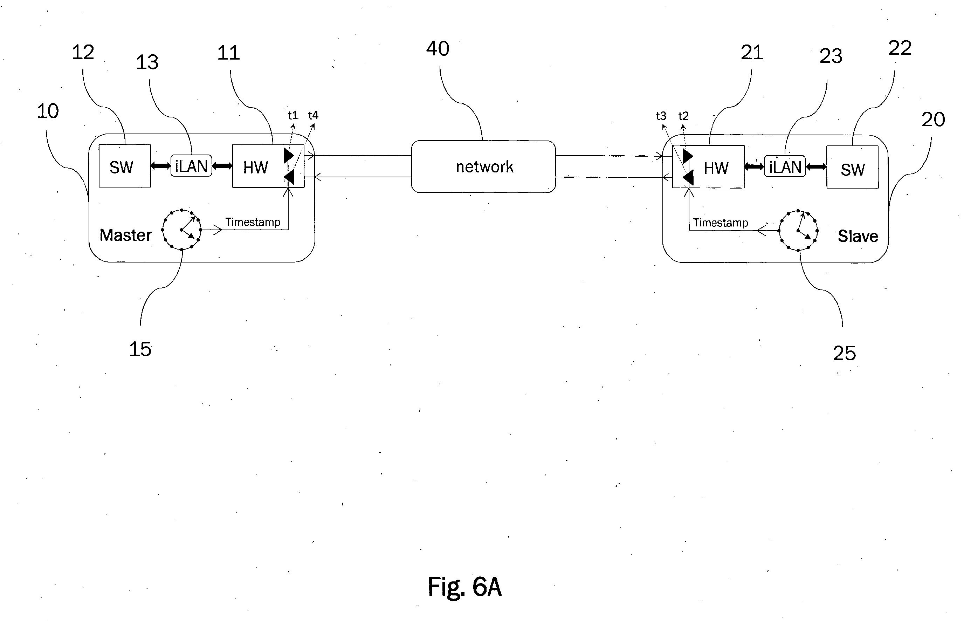

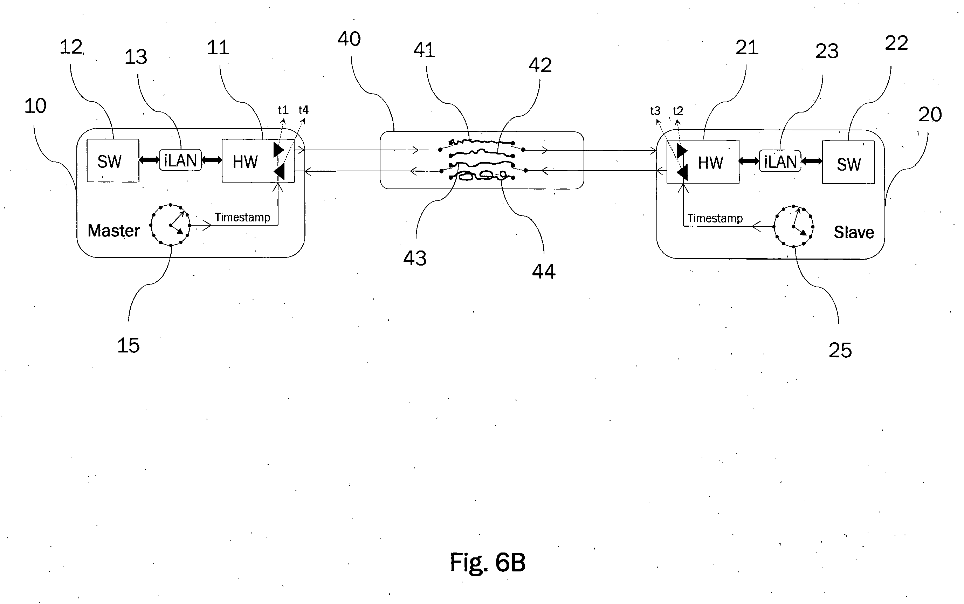

Next, the determination of the timing offset and synchronization in complex transmission networks will be explained with reference to **Fig. 6A** and **Fig. 6B.** Therein, **Fig. 6A** schematically illustrates a configuration in which the first device 10 and the second device 20 are connected by a network (e.g. a complex transmission network) 40.

In such a configuration, a communication path connecting the first device 10 and the second device 20 may have a delay asymmetry, i.e. the path delay for transmission from the first device 10 to the second device 20 may not be equal to the path delay for transmission in the reverse direction.

According to the IEEE 1588 standard, the delay asymmetry of the communication path connecting the first device 10 and the second device 20 is measured manually, as described above, before putting the configuration into service. The value of the delay asymmetry of the communication path, or equivalently the values of the path delays in the two directions, may be stored in a database and may be referred to e.g. when determining the timing offset between the internal clock 25 of the second device 20 and the internal clock 15 of the first device 10.

This procedure is working well until a switch of communication paths (e.g. a protection switch) occurs in the network. For instance, the connection between the first device 10 and the second device 20 may be changed from a first communication path (e.g. a regular path) to a second communication path (e.g. a protection path). This situation is schematically illustrated in **Fig. 6B,** in which the network 40 has a first communication path (e.g. a regular path) 41, 43 and a second communication path (e.g. a protection path) 42, 44. The network 40 may have first to fourth sub paths 41, 42, 43, 44. The first and second sub paths 41, 42 may form the first communication path, and the third and fourth sub paths 43, 44 may form the second communication path. Transmission via the first communication path from the first device 10 to the second device 20 may proceed via the first sub path 41, and transmission via the first communication path from the second device 20 to the first device 10 may proceed via the second sub path 42. Further, transmission via the second communication path from the first device 10 to the second device 20 may proceed via the third sub path 43, and transmission via the second communication path from the second device 20 to the first device 10 may proceed via the fourth sub path 44.

The first sub path 41 and second sub path 42 may have different path delays, i.e. the first communication path may have a non-zero delay asymmetry. Likewise, the third sub path 43, and fourth sub path 44 may have different path delays, i.e. the second communication path may have a non-zero delay asymmetry. Notably, the delay asymmetry of the first communication path and the delay asymmetry of the second communication path may not be equal to each other, and in reality typically differ from each other. Thus, the first communication path may have a delay asymmetry different from the delay asymmetry of the second communication path.

As indicated above, the delay asymmetry of the first communication path may be known, e.g. due to previous manual measurement of the delay asymmetry. However, the delay asymmetry of the second communication path after a switch of communication paths typically is not known. In other words, upon a switch of communication paths, the delay asymmetry changes from a known value to an unknown value. Since the delay asymmetry for the second communication path is not known, the timing offset between the internal clock 25 of the second device 20 and the internal clock 15 of the first device 10 may not be determined correctly, and synchronization (alignment) of the internal clock 25 of the second device 20 with the internal clock 15 of the first device 10 becomes impossible.

The above issue is addressed by embodiments of the present disclosure. In general terms, the present disclosure relates to automatically calculating the asymmetrical delay (delay asymmetry) of a communication path (e.g. protection path) after a switch of communication paths (e.g. protection switch) and particularly suggest an algorithm for doing so. The automatic calculation is based on the realization that the internal clock (e.g. slave clock) of the second device runs like a flying wheel after the switch of communication paths, because its time-base is not changed. Therefore, the timing offset remains at its previous value (e.g. zero). While the time-base of the internal clock of the second device can drift away due to holdover-instability, this is considered a quite slow process in a range of minutes to hours. Accordingly, sufficient working time (e.g. a few seconds) for performing the proposed algorithm is provided for. The proposed algorithm is exemplified by Equations (5) and (6) recited below.

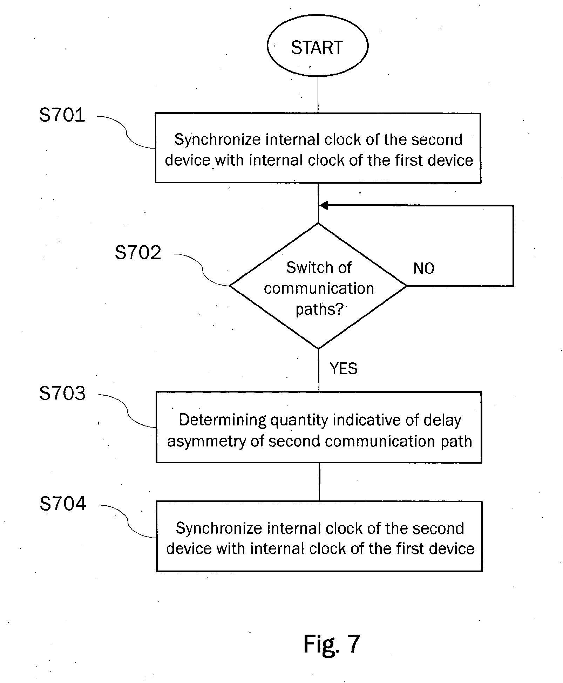

A method for correctly determining the delay asymmetry of the second communication path as well as the timing offset between the internal clock 25 of the second device 20 and the internal clock 15 of the first device 10, and accordingly for synchronizing the internal clock 25 of the second device 20 with the internal clock 15 of the first device 10 will now be described with reference to Fig. 7. Fig. 7 schematically illustrates a flow chart of an example of a method according to embodiments of the invention.

At step S701, the internal clock 25 of the second device 20 may be synchronized with the internal clock 15 of the first device 10. To this end, the timing offset between the internal clock 25 of the second device 20 and the internal clock 15 of the first device 10 may be determined based on time stamps indicative of timings of transmission and reception of messages between the first device 10 and the second device 20 via the first communication path and the known delay asymmetry of the first communication path. Therein, at least one message may be transmitted from the first device 10 to the second device 20, and at least one message may be transmitted from the second device 20 to the first device 10. For instance, first and second messages may be exchanged, as described above, yielding time stamps t1, t2, t3, t4. The process may further involve transmission of third and fourth messages from the first device 10 to the second device 20, as described above, for transmitting time stamps t1 and t4 to the second device 20. Determination of the timing offset may use Equation (4) given above, or a mathematical equivalent thereof. That is, the timing offset may be determined based on time stamps indicative of timings of transmission and reception of messages between the first device 10 and the second device 20 via the first communication path (e.g. time stamps t1, t2, t3, t4) and the known delay asymmetry of the first communication path. Having determined the timing offset, actual synchronization may proceed as described above, e.g. by appropriately shifting the time frame of the internal clock 25 of the second device 20. As a result of performing step S701, it may be said that the internal clock 25 of the second device 20 is synchronized with the internal clock 15 of the first device 10.

At step S702, it is determined whether a switch of communication paths has occurred, e.g. whether a protection switch has occurred in the network 40. In general terms, the switch of communication paths can be detected by an unexpected change in the calculated timing offset between the internal clock 25 of the second device 20 and the internal clock 15 of the first device 10. The switch of communication paths can be detected and/or confirmed by a notification from a network manager, a local alarm, and/or a remote alarm. Depending on the kind of the network 40 and the connection layer in the network 40, one or more of the above events can be used to detect and/or approve the switch of communication paths.

This determination may involve repeatedly determining the timing offset between the internal clock 25 of the second device 20 and the internal clock 15 of the first device 10 based on time stamps indicative of timings of transmission and reception of messages exchanged between the first device 10 and the second device 20 via the first communication path and the known delay asymmetry of the first communication path. This exchange may proceed as described above with reference to step S701, e.g. may involve exchanging first and second messages, or first to fourth messages as described above. Likewise, determination of the timing offset may proceed as described above with reference to step S701, e.g. may involve using e.g. Equation (4) given above. This may further involve repeatedly exchanging said messages, e.g. at regular intervals. The repeatedly determined timing offsets may then be compared to each other. Consecutively determined timing offsets may be compared to each other, and if a difference between the two consecutively determined timing offsets is found to be above a given threshold, it may be determined that a switch of communication paths from the first communication path to the second communication path has occurred. The reason is that on occurrence of the switch of communication paths the delay asymmetry changes abruptly. Then, using time stamps of messages exchanged via the second communication path but using the delay asymmetry of the first communication path will result in a wrong determination result of the timing offset, so that the timing offset determined after the switch of communication paths will deviate from the timing offset determined before the switch of communication paths. This may be detected by comparing said determined timing offsets to each other, i.e. comparing their difference to a predetermined threshold.

Alternatively or additionally, the determination may involve receiving, e.g. at the second device 20, a message indicating the switch of communication paths. Such message may be sent by a network administrator or may be automatically generated upon a switch of communication paths in the network 40. Alternatively or additionally, the determination may involve receiving, e.g. at the second device 20, a message indicating loss of signal at a network device of the network 40. Typically, a loss of signal at one of the network devices is an indication of physical damage in some portion of the network 40, and thus an indication of an imminent switch of communication paths (e.g. protection switch).

If a switch of communication paths has been detected (YES at step S702), the method proceeds to step S703. Otherwise (NO at step S702), the method may return to step S702 and continue monitoring of whether a switch of communication paths has occurred. Alternatively, if a given amount of time has passed since the previous synchronization of the internal clock 25 of the second device 20 with the internal clock 15 of the first device 10, the method may also return to step S701 to perform synchronization.

At step S703, a quantity indicative of the delay asymmetry of the second communication path may be determined. The quantity may be the delay asymmetry itself, e.g. the delay asymmetry defined in Equation (3), or twice the delay asymmetry defined in Equation (3), or any other quantity indicative of the delay asymmetry. This determination may be performed based on time stamps indicative of timings of transmission and reception of messages exchanged between the first device 10 and the second device 20 via the second communication path. This exchange of messages may proceed as described above with reference to step S701, e.g. may involve exchanging first to second messages, or first to fourth messages as described above, via the second communication path. Further, this determination may involve assuming that the timing offset between the internal clock 25 of the second device 20 and the internal clock 15 of the first device 10 is zero (in case of an appropriate shift of the time reference of the internal clock 25 of the second device 20 at the time of synchronization at step S701), or at least known (if such appropriate shift has not been performed, and the timing offset has merely been stored for use in arithmetic correction of time stamps of the internal clock 25 of the second device 20). In the latter case, it may be assumed that the timing offset is equal to any timing offset determined during the synchronization at step S701. Typically however, it may be assumed that the timing offset between the internal clock 25 of the second device 20 and the internal clock 15 of the first device 10 is zero.

This assumption is based on the realization that the internal clock 25 of the second device 20 runs like a flying wheel after occurrence of a switch of communication paths from the first communication path to the second communication path, since its time base it not changed. Accordingly, the timing offset substantially remains at its previous value, i.e. is substantially zero, or is at least known. Notably, such an assumption is not foreseen in the IEEE standard.

Based on this assumption, the quantity indicative of the,delay asymmetry of the second communication path may be determined on the basis of said time stamps alone (in case that the timing offset is substantially zero), or exclusively on the basis of said time stamps and the timing offset (in case that the timing offset is not zero, but known).

In order for the above assumption to be valid, determining the quantity indicative of the delay asymmetry of the second communication path may be performed no later than a predetermined period of time after said switch of communication paths has occurred. Said predetermined period of time may be shorter than a minute, e.g. may be on the order of seconds. Further, said predetermined period of time may be set in dependence on a known drift rate of the internal clock 25 of the second device 20. For example, the smaller said drift rate, the longer the predetermined period of time, and vice versa.

As indicated above, determining the quantity indicative of the delay asymmetry of the second communication path may involve exchanging messages between the first device and the second device via the second communication path. At least one message may be transmitted from the first device 10 to the second device 20, and at least one message may be transmitted from the second device 20 to the first device 10. For example, the messages exchanged between the first device 10 and the second device 20 via the second communication path may be the first and second messages described above. Further, respective timings of transmission and reception of these messages may be recorded as time stamps in the first device and in the second device, as described. For example, the time stamps obtained at this point may be time stamps t1, t2, t3, t4 described above. This may further require transmitting the time stamps recorded at the first device to the second device via the second communication path, e.g. by transmitting the third and fourth messages described above from the first device 10 to the second device 20. Obtaining the time stamps may proceed in analogy to the procedure described above with reference to step S701, with the difference that messages are now exchanged via the second communication path instead of the first communication path.

Then, having obtained the time stamps, the delay asymmetry dA of the second communication path may be determined (calculated) via formula

$$dA = \Delta t + \tfrac{1}{2}\left[(t4 - t3) - (t2 - t1)\right] \tag{5}$$

in case that the timing offset $\Delta t$ is non-zero, but known, or via

$$dA = \tfrac{1}{2}\,[(t4 - t3) - (t2 - t1)], \qquad\qquad (6)$$

in case that the timing offset $\Delta t$ is assumed to be zero.

Notably, Equation (5) reduces to Equation (6) for $\Delta t = 0$, to that Equation (5) might be used in either case. It is understood that also mathematical equivalents of Equations (5) and (6) may be used.

Recapitulating, in the above dA indicates the delay asymmetry of the second communication path, $\Delta t$ indicates the timing offset between the internal clock 25 of the second device 20 and the internal clock 15 of the first device 10, t1 indicates the time stamp of transmission of the first message transmitted by the first device to the second device via the second communication path, t2 indicates the time stamp of reception of the first message at the second device, t3 indicates the time stamp of transmission of the second message transmitted by the second device to the first device via the second communication path, and t4 indicates the time stamp of reception of the second message at the first device.

At step S704, the internal clock 25 of the second device 20 may be synchronized with the internal clock 15 of the first device 10. Having obtained the delay asymmetry, the timing offset between the internal clock 25 of the second device 20 and the internal clock 15 of the first device 10 may be determined on the basis of said time stamps indicative of the timings of transmission and reception of the messages exchanged between the first device and the second device via the second communication path (e.g. time stamps t1, t2, t3, t4) and the determined delay asymmetry of the second communication path. The timing offset may be determined e.g. using Equation (4) or a mathematical equivalent thereof. Then, the internal clock 25 of the second device 20 may be synchronized with the internal clock 15 of the first device 10, using the determined timing offset. Again, this may be achieved by appropriately shifting the time frame of the internal clock 25 of the second device 20, e.g. by subtracting the determined timing offset from the ToD of the internal clock 25 of the second device 20. Alternatively, the timing offset may be stored, and time stamps produced by the internal clock 25 of the second device 20 may be arithmetically corrected, using the stored value of the timing offset. Notably, the synchronization at step S704 corresponds to the synchronization at step S701, with the difference that this time messages are exchanged between the first device 10 and the second device 20 using the second communication path, and that the delay asymmetry of the second communication path determined at step S703 is used instead of the known delay asymmetry of the first communication path.

By the method exemplarily described with reference to Fig. 7, the delay asymmetry of a new communication path after a switch of communication paths may be determined without manual measurement, exclusively based on time stamps of transmission and reception of messages exchanged between the first device 10 and the second device 20 via the new communication path. These time stamps may e.g. relate to time stamps of transmission of a message from the first device 10 to the second device 20, and time stamps of transmission and reception of a message in the reverse direction. Accordingly, the necessity for manual measurement of the delay asymmetry of the new communication path is removed. Notably, the method may also be applied in case of further switches of communication paths.

In summary, the present disclosure suggest the following general workflow for determination of the delay asymmetry in view of switches of communication paths: As a first step, the delays "first device to second device" (e.g. "master to slave") and "second device to first device" (e.g. "slave to master") are measured for the original communication path of the network. This may involve manual work. Both delays may be stored in a database. The delay asymmetry of the original communication path may be calculated and used for all subsequent calculations. As further steps, if a switch of communication paths is detected (approved), Equation (5) or (6) may be employed to automatically calculate the delay asymmetry of the new communication path. Manual action is not required at these further steps.

It should be noted that the apparatus features described above correspond to respective method features that may however not be explicitly described, for reasons of conciseness, and vice versa. The disclosure of the present document is considered to extend also to such method features and apparatus features, respectively. In particular, the present disclosure is understood to also relate to and encompass a device or apparatus capable of carrying out the method described with reference to Fig. 7, the device or apparatus comprising respective means or units adapted to perform the steps of said method. These means or units may be implemented in hardware and/or software, in accordance with respective specific requirements.

It should further be noted that the description and drawings merely illustrate the principles of the proposed apparatus. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed method and apparatus. Furthermore, all statements herein providing principles, aspects, and embodiments of the invention, as well as specific examples thereof, are intended to encompass equivalents thereof.

**Claims**

1. A method of determining asymmetric delay in a network providing a first communication path between a first device and a second device, and a second communication path between the first device and the second device, wherein a delay asymmetry of the first communication path is known, the method comprising:

synchronizing an internal clock of the second device with an internal clock of the first device based on the known delay asymmetry of the first communication path and time stamps indicative of timings of transmission and reception of messages exchanged between the first device and the second device via the first communication path;

determining whether a switch of communication paths from the first communication path to the second communication path has occurred in the network; and

if said switch of communication paths has occurred, determining, at the second device, a quantity indicative of a delay asymmetry of the second communication path on the basis of time stamps indicative of timings of transmission and reception of messages exchanged between the first device and the second device via the second communication path.

2. The method according to claim 1, wherein determining the quantity indicative of the delay asymmetry of the second communication path involves assuming that a timing offset between the internal clock of the second device and the internal clock of the first device is zero or known.

3. The method according to claim 2, wherein determining the quantity indicative of the delay asymmetry of the second communication path is performed exclusively on the basis of the time stamps indicative of the timings of transmission and reception of the messages exchanged between the first device and the second device via the second communication path, and, if the timing offset is known but different from zero, said timing offset.

4. The method according to any one of the preceding claims, wherein the step of determining the quantity indicative of the delay asymmetry of the second communication path is performed no later than a predetermined period of time after said switch of communication paths has occurred.

5. The method according to any one of the preceding claims, wherein determining the quantity indicative of the delay asymmetry of the second communication path involves:

exchanging messages between the first device and the second device via the second communication path;

recording respective timings of transmission and reception of these messages as time stamps in the first device and in the second device; and

transmitting time stamps recorded at the first device to the second device via the second communication path.

6. The method according to any one of claims 2 to 5, wherein determining the delay asymmetry of the second communication path is performed using the formula

$$dA = \Delta t + \tfrac{1}{2}\left[(t4 - t3) - (t2 - t1)\right]$$

or a mathematical equivalent thereof,

where dA indicates the delay asymmetry of the second communication path, $\Delta t$ indicates the timing offset, t1 indicates the time stamp of transmission of a first message transmitted by the first device to the second device via the second communication path, t2 indicates the time stamp of reception of the first message at the second device, t3 indicates the time stamp of transmission of a second message transmitted by the second device to the first device via the second communication path, and t4 indicates the time stamp of reception of the second message at the first device.

7. The method according to claim 6, further comprising:

transmitting the first message by the first device to the second device via the second communication path;
recording a timing of transmission of the first message at the first device as time stamp t1;
receiving the first message at the second device;
recording a timing of reception of the first message at the second device as time stamp t2;

transmitting the second message by the second device to the first device via the second communication path;
recording a timing of transmission of the second message at the second device as time stamp t3;
receiving the second message at the first device; and
recording a timing of reception of the second message at the first device as time stamp t4.

8. The method according to any one of the preceding claims, further comprising:

synchronizing the internal clock of the second device with the internal clock of the first device based on the determined delay asymmetry of the second communication path and said time stamps indicative of said timings of transmission and reception of said messages exchanged between the first device and the second device via the second communication path.

9. The method according to any one of the preceding claims, wherein determining whether a switch of communication paths has occurred involves:

determining, at a first timing, a first timing offset between the internal clock of the first device and the internal clock of the second device based on the known delay asymmetry of the first communication path and time stamps indicative of timings of transmission and reception of messages exchanged between the first device and the second device;
determining, at a second timing, a second timing offset between the internal clock of the first device and the internal clock of the second device based on the known delay asymmetry of the first communication path and time stamps indicative of timings of transmission and reception of messages exchanged between the first device and the second device;
comparing a difference between said first and second timing offsets to a predetermined threshold; and
determining that the switch of communication paths has occurred if said difference is above said predetermined threshold.

10. The method according to any one of the preceding claims, wherein determining whether a switch of communication paths has occurred involves:

determining that a message indicating the switch of communication paths has been received at the second device; and/or
determining that a message indicating loss of signal at a network device of the network has been received at the second device.

11. The method according to any one of the preceding claims, wherein the switch of communication paths relates to a protection switch and the second communication path relates to a protection path.

12. An apparatus for determining asymmetric delay in a network providing a first communication path between a first device and a second device, and a second communication path between the first device and the second device, wherein a delay asymmetry of the first communication path is known, wherein the apparatus comprises:

synchronizing means for synchronizing an internal clock of the second device with an internal clock of the first device based on the known delay asymmetry of the first communication path and time stamps indicative of timings of transmission and reception of messages exchanged between the first device and the second device via the first communication path;
path switch detection means for determining whether a switch of communication paths from the first communication path to the second communication path has occurred in the network; and
delay asymmetry calculation means for calculating a delay asymmetry, wherein said calculation means is adapted to, if said switch of communication paths has occurred, calculate a quantity indicative of a delay asymmetry of the second communication path on the basis of time stamps indicative of timings of transmission and reception of messages exchanged between the first device and the second device via the second communication path.

13. The apparatus according to claim 12, wherein the delay asymmetry calculation means is adapted to assume in the calculation that a timing offset between the internal clock of the second device and the internal clock of the first device is zero or known.

14. The apparatus according to claim 12 or 13, wherein the delay asymmetry calculation means is adapted to perform the calculation of the quantity indicative of the delay asymmetry of the second communication path no later than a predetermined period of time after said switch of communication paths has occurred.

15. The apparatus according to any one of claims 12 to 14, wherein the delay asymmetry calculation means is adapted to calculate of the quantity indicative of the delay asymmetry of the second communication path by using the formula

$$dA = \Delta t + 1/2 \left[ (t4\text{-}t3)\text{-}(t2\text{-}t1) \right]$$

or a mathematical equivalent thereof,
where dA indicates the delay asymmetry of the second communication path, $\Delta t$ indicates the timing offset, t1 indicates the time stamp of transmission of a first message transmitted by the first device to the second device via the second communication path, t2 indicates the time stamp of reception of the first message at the second device, t3 indicates the time stamp of transmission of a second message transmitted by the second device to the first device via the second communication path, and t4 indicates the time stamp of reception of the second message at the first device.

Fig. 1

Fig. 2

EP 3 068 076 A1

Fig. 3

EP 3 068 076 A1

$\text{ToD}_{\text{Master}}$                  $\text{ToD}_{\text{Slave}}$

1000 ←——— offset = 254 ———→ 1254

1001                          1255

t1 = 1010                     1264

$\qquad delay = 183$
$\qquad\quad SYNC$

1193                          1447 = t2

1200                          1454 = t3

$\qquad delay = 231$
$\qquad DELAY\_REQUEST$

t4 = 1431                     1685

1600                          1854

1601                          1855 - 230

1602 ←——— Offset not 0 ———→ 1626

## Fig. 4

ToD _Master_    offset = 254    ToD _Slave_

1000 ⟷ 1254

1001                  1255

t1 = 1010            1264

delay = 183
SYNC

1193                  1447 = t2

1200                  1454 = t3

delay = 231
DELAY_REQUEST

t4 = 1431            1685

1600                  1854

1601                  1855 - 254

1602 ⟷ Offset = 0 ⟶ 1602

Fig. 5

Fig. 6A

EP 3 068 076 A1

Fig. 6B

EP 3 068 076 A1

```
                          ┌─────────┐
                          │  START  │
                          └────┬────┘
                               │
S701 ─────╮    ┌───────────────┴───────────────┐
          ╰────│ Synchronize internal clock of the second │
               │ device with internal clock of the first device │
               └───────────────┬───────────────┘
                               │
                               │◄──────────────────────┐
                               │                       │
                               ◇                       │
S702 ─────╮              ╱    Switch of    ╲    NO      │
          ╰─────────────◇    communication   ◇─────────┘
                         ╲     paths?      ╱
                          ◇              ◇
                               │
                              YES
                               │
S703 ─────╮    ┌───────────────┴───────────────┐
          ╰────│ Determining quantity indicative of delay │
               │ asymmetry of second communication path │
               └───────────────┬───────────────┘
                               │
S704 ─────╮    ┌───────────────┴───────────────┐
          ╰────│ Synchronize internal clock of the second │
               │ device with internal clock of the first device │
               └───────────────────────────────┘
```

Fig. 7

Fig. 8

Europäisches
Patentamt
European
Patent Office
Office européen
des brevets

**EUROPEAN SEARCH REPORT**

Application Number

EP 15 29 0064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/079460 A1 (ABB RESEARCH LTD [CH]; SU BIN [CN]; LI YOUYI [CN]; EINARSSON TORBJORN) 7 July 2011 (2011-07-07) <br> * page 5, line 33 - page 8, line 22; figures 1A,1B * | 1-15 | INV. <br> H04L12/26 <br> H04J3/06 |
| A | EP 2 731 303 A1 (ZTE CORP [CN]) 14 May 2014 (2014-05-14) <br> * paragraphs [0005], [0006] - paragraph [0026] * <br> * figures 1-3 * | 1-15 | |
| A | EXEL REINHARD: "Mitigation of Asymmetric Link Delays in IEEE 1588 Clock Synchronization Systems", IEEE COMMUNICATIONS LETTERS, IEEE SERVICE CENTER, PISCATAWAY, NJ, US, vol. 18, no. 3, 31 March 2014 (2014-03-31) , pages 507-510, XP011544857, ISSN: 1089-7798, DOI: 10.1109/LCOMM.2014.012214.132540 [retrieved on 2014-04-08] <br> * the whole document * | 1-15 | TECHNICAL FIELDS SEARCHED (IPC) <br><br> H04L <br> H04J |
| A | "Management Support for Automatic Measurement of Link Delay Asymmetry ; asbt-huang-measurement-of-link-delay-asymmetry-1031-v00", IEEE DRAFT; ASBT-HUANG-MEASUREMENT-OF-LINK-DELAY-ASYMMETRY-1031-V00, IEEE-SA, PISCATAWAY, NJ USA, vol. 802.1, no. v00, 7 November 2011 (2011-11-07), pages 1-11, XP017653685, [retrieved on 2011-11-07] <br> * pages 6,7,8 * | 1-15 | |

The present search report has been drawn up for all claims

| Place of search | Date of completion of the search | Examiner |
|---|---|---|
| Munich | 1 July 2015 | Bertsch, Andreas |

EPO FORM 1503 03.82 (P04C01)

## ANNEX TO THE EUROPEAN SEARCH REPORT
## ON EUROPEAN PATENT APPLICATION NO.

EP 15 29 0064

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2015

| Patent document cited in search report | | Publication date | Patent family member(s) | | Publication date |
|---|---|---|---|---|---|
| WO 2011079460 | A1 | 07-07-2011 | CN | 102652409 A | 29-08-2012 |
| | | | EP | 2520040 A1 | 07-11-2012 |
| | | | US | 2012147941 A1 | 14-06-2012 |
| | | | WO | 2011079460 A1 | 07-07-2011 |
| EP 2731303 | A1 | 14-05-2014 | CN | 102932905 A | 13-02-2013 |
| | | | EP | 2731303 A1 | 14-05-2014 |
| | | | US | 2014146811 A1 | 29-05-2014 |
| | | | WO | 2013020499 A1 | 14-02-2013 |

EPO FORM P0459

For more details about this annex : see Official Journal of the European Patent Office, No. 12/82